# FASCICULE DE BREVET EUROPEEN

(11) **EP 2 117 807 B1**
(45) Date de publication et mention de la délivrance du brevet: **10.04.2013**
(21) Numéro de dépôt: 08761847.6
(22) Date de dépôt: 07.02.2008
(51) Int. Cl.: B29C 49/58, B29C 49/06, B29C 49/36

(54) **TUYÈRE POUR UNE MACHINE DE FABRICATION DE RÉCIPIENTS**
BLASDÜSE FÜR EINE BEHÄLTERHERSTELLUNGSMASCHINE
BLOW NOZZLE FOR A CONTAINER MAKING MACHINE

(30) Priorité: 16.02.2007 FR 0701130
(43) Date de publication de la demande: 18.11.2009
(73) Titulaire: Sidel Participations, 76930 Octeville Sur Mer (FR)
(72) Inventeur: LE DIEU, Xavier, F-76930 Octeville Sur Mer (FR); LACAILLE, Franck, F-76930 Octeville Sur Mer (FR)
(74) Mandataire: Louiset, Raphael
(86) Numéro de dépôt international: PCT/FR2008/000144
(87) Numéro de publication internationale: WO 2008/113907

(56) Documents cités:
- WO-A-01/53063
- DE-A1- 10 063 553
- FR-A- 2 848 905

## Description

L'invention se rapporte au domaine de la fabrication des récipients, par soufflage ou étirage soufflage.

Le soufflage des récipients a lieu dans un moule définissant une cavité dans laquelle on introduit une ébauche en matière plastique préalablement chauffée de manière à ramollir la matière (le terme « ébauche » vise non seulement une préforme mais également un récipient intermédiaire ayant subi un ou plusieurs soufflages préalables), cette ébauche étant ensuite mise sous pression pour lui conférer une forme prédéterminée correspondant à cette de la cavité.

L'introduction d'un gaz dans l'ébauche se fait par l'intermédiaire d'une tuyère qui, après que l'ébauche a été introduite dans la cavité par une ouverture dans le moule, est appliquée de manière étanche contre une face supérieure de celui-ci. Compte tenu de sa forme, la tuyère, qui vient recouvrir le col de l'ébauche dépassant du moule, est généralement appelée « tuyère cloche ».

On trouvera une illustration de cette technique dans la demande de brevet français N° FR 2 848 905 ou dans la demande de brevet américain équivalente N°US 2006/0115546, toutes deux au nom de la demanderesse.

On pourra egalement se référer aux documents WO 01/53063 qui décrit une tuyère pour une machine de soufflage selon le préambule de la revendication 1. (SIDEL) et DE 10 063 553 (KRONES).

Cette technique donne satisfaction, mais elle mérite d'être perfectionnée. En effet, il est récurent que des récipients soient mal formés, car présentant un col de guingols par rapport au corps. Des expériences conduites par les inventeurs ont démontré qu'une telle malformation provient d'un mauvais positionnement de l'ébauche dans le moule, dû à un phénomène de rebond : l'ébauche, positionnée à l'aplomb de l'ouverture puis lâchée dans le moule depuis une certaine hauteur (supérieure à la longueur de son corps), a tendance à rebondir par sa collerette contre la face supérieure du moule. Le rebond peut atteindre plusieurs centimètres, et dans certains cas l'ébauche n'a pas eu le temps de se recentrer en retombant dans l'ouverture du moule, avant que la tuyère ne vienne la recouvrir. Dans de telles circonstances la tuyère coince l'ébauche dans sa position désaxée. Le soufflage, effectué en dépit de ce mauvais positionnement de l'ébauche, conduit à un récipient difforme qui, outre qu'il est visuellement inesthétique, s'avère souvent impropre au remplissage et au mouchage.

Pour éviter que de tels récipients ne soient envoyés au remplissage et au bouchage, on a généralement recours à des solutions de contrôle visuel et d'éjection des récipients mal formés. De telles solutions, outre qu'elles sont lourdes et coûteuses, ne permettent pas de diminuer le taux de rebut.

L'invention vise notamment à remédier aux inconvénients précités des techniques connues, en proposant une solution permettant d'améliorer la qualité moyenne des récipients.

A cet effet, l'invention propose, suivant un premier, objet, une tuyère pour une machine de soufflage ou d'étirage soufflage de récipients à partir d'ébauches en matière plastique, selon la revendication 1.

La face d'appui présente par exemple, par rapport à un plan perpendiculaire, à un axe de déplacement de l'insert, un angle d'ouverture compris entre 10° environ et 60° environ,

Suivant une autre variante, la face d'appui de l'insert présente une portion centrale plane (qui présente un diamètre extérieur de préférence supérieur ou égal au diamètre du buvant de l'ébauche), prolongée radialement par une portion périphérique tronconique.

Suivant un mode de réalisation, le corps de tuyère définit une butée de fin de course de l'insert en position basse.

L'invention propose, suivant un deuxième objet, une machine de fabrication de récipients par soufflage ou étirage soufflage à partir d'ébauchès en matière plastique, qui comprend :
- au moins une unité de moulage munie d'un moule destiné à recevoir une ébauche, et
- une tuyère telle que décrite ci-dessus, montée mobile entre une position haute où elle est écartée d'une face supérieure du moule pour permettre l'introduction de l'ébauche dans le moule, et une position basse dans laquelle elle est appliquée contre la face supérieure du moule.

D'autres objets et avantages de l'invention apparaîtront à la lumière de la description faite ci-après en référence aux dessins annexés dans lesquels :
- la figure 1 est une vue d'élévation en coupe montrant une tuyère disposée à l'aplomb d'un moule destiné à recevoir une ébauche pour la fabrication d'un récipient ;
- la figure 2 est une vue similaire à la figure 1, à un instant où une préforme vient à peine d'être introduite dans le moule ;
- la figure 3 est une figure similaire à la figure 2, dans laquelle la tuyère est en phase de descente sur le moule ;
- la figure 4 est une figure similaire à la figure 3, dans laquelle la tuyère est appliquée cotre le moule ;
- les figures 5 à 8 sont des vues similaires aux figures 1 à 4 respectivement, dans lesquelles la tuyère correspond à une variante de réalisation ;
- la figure 9 est une figure montrant partiellement la tuyère selon une autre variante de réalisation, disposée à l'aplomb d'une préforme.

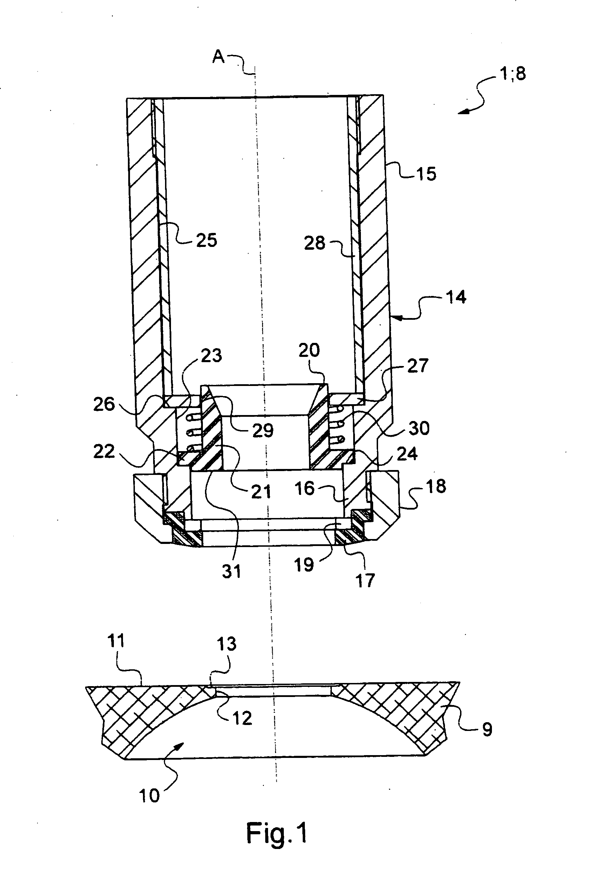

Sur les figures 1 à 8 est partiellement représentée une machine 1 de fabrication de récipients par soufflage ou étirage soufflage à partir d'ébauches 2 en matière plastique tel que PET. Bien qu'il puisse tout aussi bien s'agir d'un récipient intermédiaire ayant subi au moins un soufflage préalable, nous supposons dans ce qui suit que l'ébauche 2 considérée est une préforme ayant simplement subi une opération de chauffe à une température supérieure à sa température de transition vitreuse.

La préforme 2 comprend un col 3, qui reste sensiblement inchangé au cours du soufflage et présente à une extrémité supérieure un buvant 4 de forme circulaire. Le col 3 est prolongé, au-dessous d'une collerette 5 permettant d'assurer la sustentation de la préforme 2 au cours des étapes de fabrication (chauffe, soufflage) du récipient, par un corps 6 sensiblement cylindrique fermé à une extrémité inférieure par une calotte hémisphérique **7.**

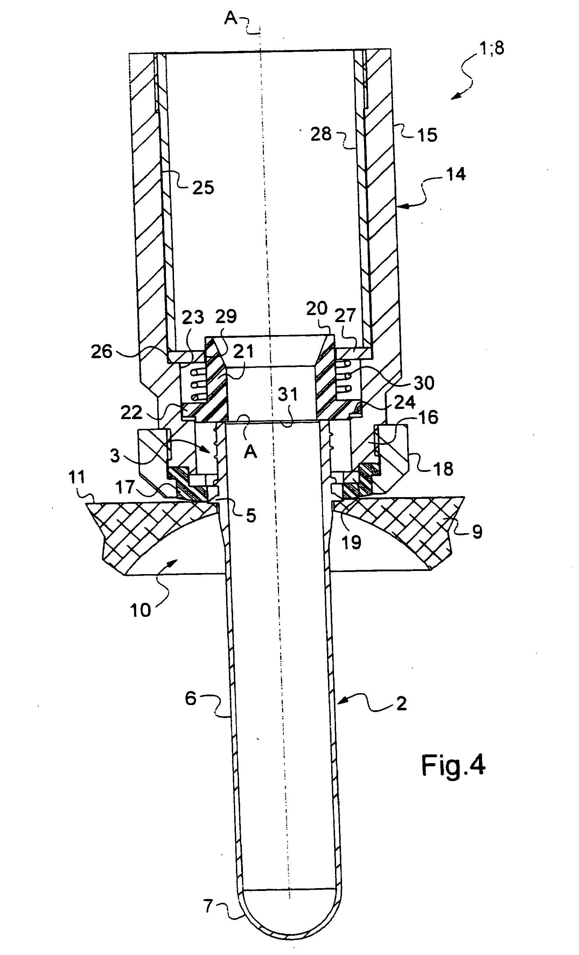

En pratique, la machine **1** comprend une pluralité d'unités **8** de moulage dont une seule est représentée sur les figures. Cette unité **8** comprend un moule **9** creusé d'une cavité **10** définissant la forme finale du récipient. A une extrémité supérieure, le moule **9** présente une face supérieure **11** sur laquelle la cavité **10** débouche par une ouverture **12** circulaire au travers de laquelle la préforme **2** est introduite dans le moule **9**. Comme cela est visible notamment sur la figure 1, l'ouverture est munie d'un lamage **13** dans lequel vient se caler la collerette **5** de la préforme 2 lorsque celle-ci est normalement introduite dans le moule **9** (figure 4).

L'unité **8** de moulage comprend en outre une tuyère **14** cloche montée déplaçable, dans l'axe du moule **9**, entre une position haute où elle est écartée de la face supérieure **11** du moule **9** pour permettre l'introduction de la préforme **2** dans celui-ci, et une position basse où elle est appliquée contre la face supérieure **11**.

La tuyère **14** comprend un corps **15** de tuyère tubulaire qui, lorsque la fabrication du récipient inclut une opération d'étirage, est traversé par une tige d'élongation (non représentée) coulissante.

A une extrémité inférieure, le corps **15** de tuyère est conformé en un embout **16** fileté sur lequel est monté un joint **17** annulaire d'étanchéité (réalisé dans un matériau flexible tel que caoutchouc - naturel ou synthétique - ou silicone) dont la fixation est assurée par une bague **18** vissée sur l'embout **16** avec interposition, entre le joint **17** et l'embout **16**, d'une rondelle **19**.

La tuyère **14** est en outre équipée d'un insert **20** monté de manière coaxiale dans le corps **15** de tuyère, à proximité de son extrémité inférieure. L'insert **20** présente une portion **21** supérieure sensiblement tubulaire, qui se prolonge par une portion **22** inférieure annulaire s'étendant radialement en saillie à partir de la portion **21** supérieure.

L'insert **20** est monté dans un alésage **23** pratiqué dans le corps **15** de tuyère. Cet alésage **23** présente un diamètre intérieur légèrement supérieur au diamètre hors tout (correspondant au diamètre extérieur de la portion **22** inférieure annulaire) de l'insert **20**, de sorte à permettre le déplacement axial de celui-ci dans l'alésage **23**.

L'alésage **23** est limité, du côté inférieur, par un épaulement **24** et se prolonge, du côté opposé, par un perçage **25** dont il est séparé par un lamage **26**. Une rondelle **27** est en outre montée dans le perçage **25** en étant maintenue en appui serré contre le lamage **26** au moyen d'une chemise **28** tubulaire emmanchée dans le perçage **25** et fixée à celui-ci par vissage (ou par tout autre moyen équivalent).

La rondelle **27** présente un trou **29** central au travers duquel passe, avec jeu, la portion **21** supérieure tubulaire de l'insert **20**. Un ressort **30** de rappel, fonctionnant en compression, est monté autour de la portion **21** supérieure en étant intercalé entre la rondelle **27** et la portion **22** annulaire de l'insert **20*.***

Ainsi, l'insert **20** est mobile axialement dans le corps **15** de tuyère entre :
- une position basse, dans laquelle l'insert **20** est plaqué, par sa portion **22** annulaire, contre l'épaulement **24** qui forme ainsi une butée de fin de course de l'insert **20**, et
- une position haute dans laquelle l'insert **20** est espacé de l'épaulement **24**, à l'encontre du ressort **30** de rappel.

Le ressort **30** de rappel sollicite en permanence l'insert **20** vers sa position basse. Lorsqu'il est entièrement comprimé, le ressort **30** forme par ailleurs une butée de fin de course de l'insert **20** en position haute.

L'insert **20** présente, à une extrémité inférieure, une face **31** d'appui propre à coopérer avec le buvant **4** de la préforme **2** pour, grâce à la force de rappel exercée par le ressort **30**, plaquer la préforme **2** contre la face **11** supérieure du moule **9** et minimiser les risques que celle-ci adopte une position désaxée pendant le soufflage.

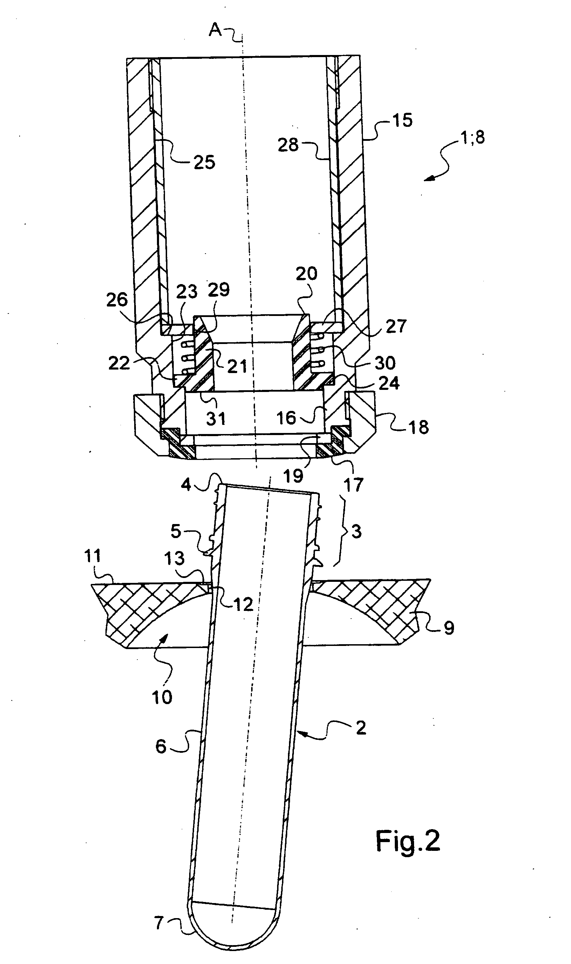

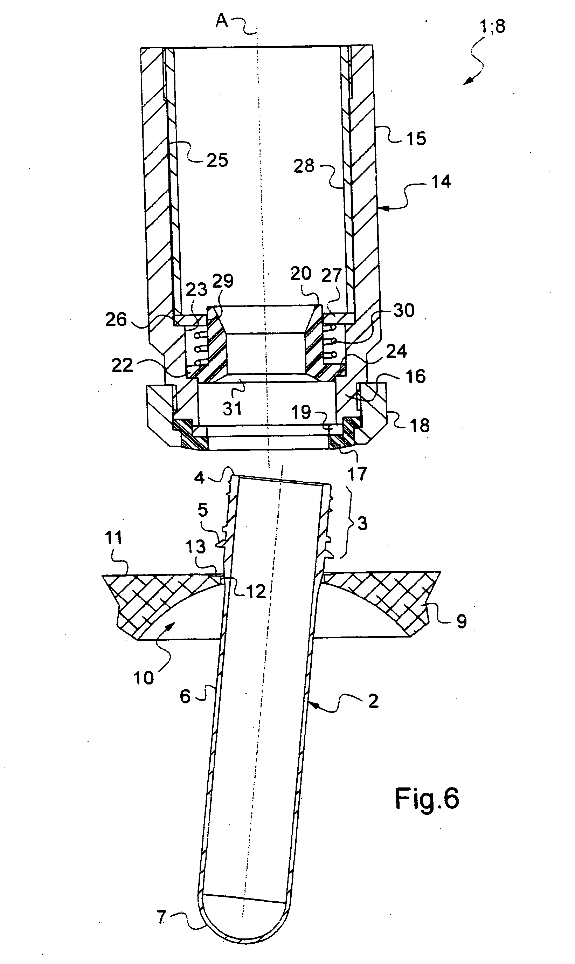

Au sortir du four, la préforme **2** est amenée à l'aplomb de l'ouverture **12** puis lâchée dans le moule **9**. Les figures 2 et 6 illustrent une situation qui se produit fréquemment : la préforme **2** rebondit contre la face **11** supérieure du moule **9**, contre l'ouverture **12** et/ou le lamage **13** et tend ainsi à se désaxer. Comme dans le même temps la tuyère **14** descend rapidement pour venir en position basse se plaquer contre le moule **9** en vue du soufflage, il peut arriver qu'en descendant la tuyère **14** bloque la préforme **2** dans une position désaxée, avec la collerette **5** à cheval sur le bord du lamage **13**.

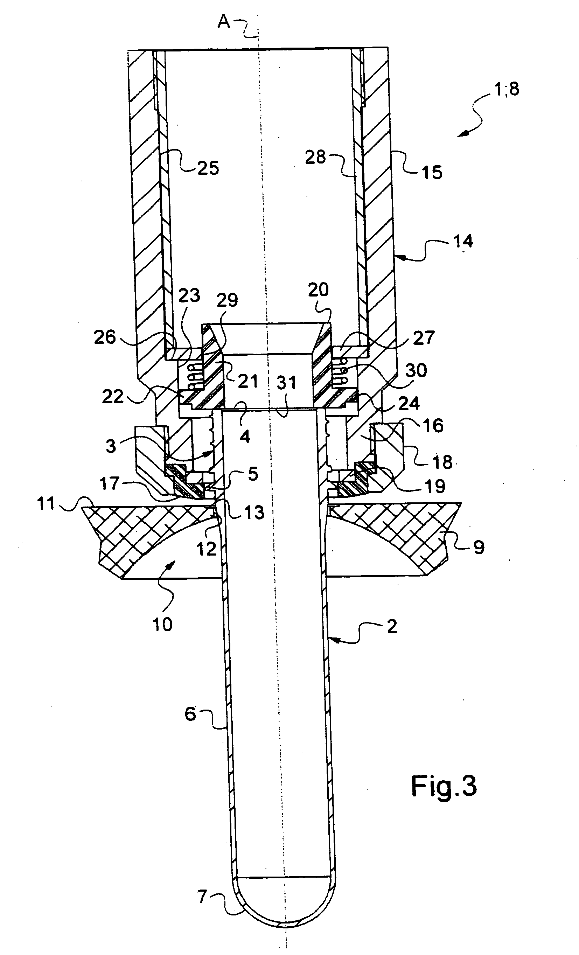

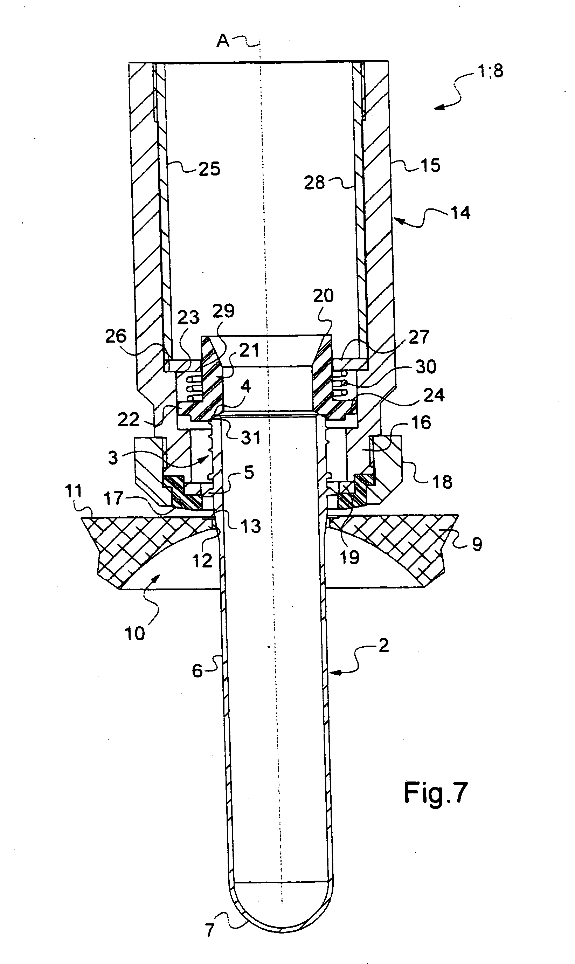

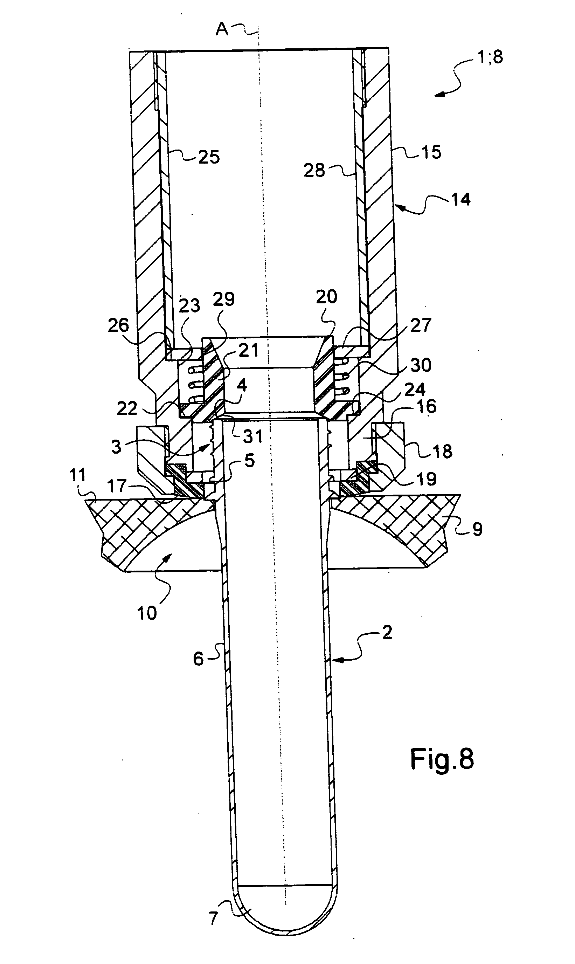

Grâce à la présence de l'insert **20**, dans l'hypothèse où la préforme **2** rebondit sur le moule **9**, elle vient heurter par son buvant **4** la face **31** d'appui de l'insert **20** (figures 3 et 7). Une partie de l'énergie du choc est absorbée par la compression du ressort **30** et le recul simultané de l'insert **20**, lequel agit ainsi à la manière d'un amortisseur vis-à-vis de la préforme **2.** La détente du ressort **30**, qui intervient une fraction de seconde après le choc, plaque la préforme **2** contre la face **11** supérieure du moule **9** avec la collerette **5** calée dans le lamage **13**, tandis que la tuyère **14** poursuit sa descente jusqu'à atteindre sa position basse (figures 4 et 8). Le nombre de rebonds de la préforme **2** est ainsi limité (des essais ont montré que la préforme n'a le temps de subir qu'un seul rebond), ce qui réduit le risque que celle-ci se désaxe par rapport au moule **9.**

Comme cela est illustré sur les figures 4 et 8, en position basse de la tuyère **14**, l'insert **20**, en appui contre le buvant **4** de la préforme **2**, est légèrement écarté de l'épaulement **24**, de sorte que la préforme **2** est en permanence plaquée contre le moule **9**. Ceci est permis par le choix des dimensions de la tuyère **14**. Plus précisément, la distance séparant la face **31** d'appui de la face inférieure du joint **17** (par laquelle celui-ci vient en appui contre la face supérieure **11** du moule **9**), est inférieure à la hauteur du col **3**.

Suivant un mode de réalisation illustré sur les figures 1 à 4, la face **31** d'appui est plane, en étant perpendiculaire à l'axe **A** de révolution de l'insert **20** (lequel axe est confondu avec l'axe de déplacement de l'insert **20**, lui-même confondu avec l'axe de la tuyère **14**).

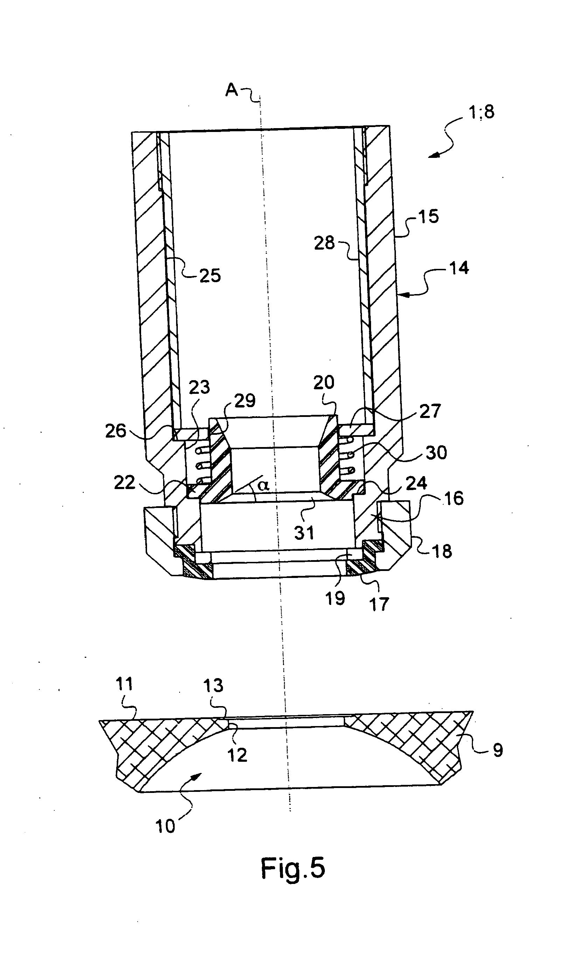

Selon une variante illustrée sur les figures 5 à 8, la face **31** d'appui est tronconique de révolution autour de l'axe A de l'insert **20**.

De la sorte, dès le premier rebond la préforme **2** venant heurter l'insert **20** est recentrée et stabilisée suivant l'axe du moule par la face **31** d'appui tronconique. Le centrage est maintenu par l'appui constant que l'insert **20** exerce sur la préforme **2** en position basse de la tuyère **14** (figure 8). Comme cela est visible sur la figure 8, la face **31** d'appui tronconique est en contact avec un bord externe du buvant **4**, de sorte que le contact entre celui-ci et l'insert **20** est limité, au bénéfice d'une bonne l'hygiène de l'ensemble.

L'angle a d'ouverture de la face **31** d'appui de l'insert **20**, par rapport à un plan perpendiculaire à l'axe **A** de l'insert **20**, est laissé au libre choix de l'homme du métier. Celui-ci pourra rechercher un bon compromis entre la force avec laquelle la préforme **2** est plaquée contre le moule **9** (force procurée par un angle a ouvert, qui maximise la composante axiale de l'effort exercé par l'insert **20** sur la préforme **2**) et le centrage de la préforme **2** (procuré par un angle a fermé, qui maximise la composante radiale de l'effort exercé par l'insert **20** sur la préforme **2**). A cet effet, l'angle a d'ouverture sera de préférence compris entre 10° environ (correspondant au premier cas) et 60° environ (correspondant au deuxième cas). Dans l'exemple illustré sur les figures 5 à 8, l'angle a d'ouverture de la face **31** d'appui est de 20° environ.

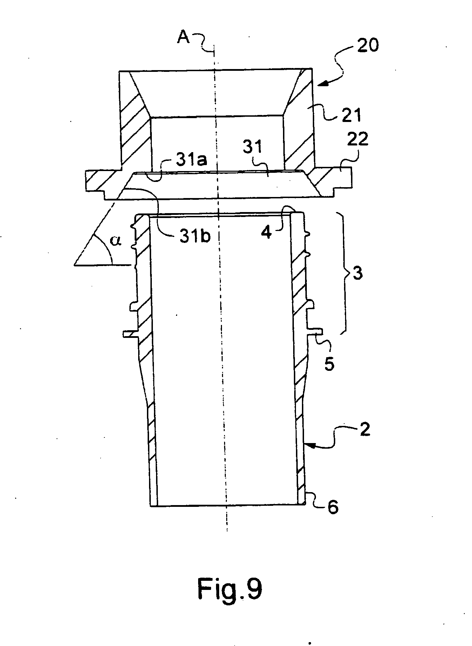

Suivant une autre variante, illustrée sur la figure 9, la face **31** d'appui combine une partie plane et une partie tronconique. Plus précisément, la face **31** d'appui présente une portion **31a** centrale plane, dont le diamètre extérieur est supérieur ou égal au diamètre du buvant **4** et qui se prolonge par une portion **31b** périphérique tronconique dont l'angle d'ouverture sera choisi de la manière décrite ci-dessus. Dans l'exemple illustré sur la figure 9, l'angle a d'ouverture de la portion **31b** périphérique tronconique est de 60° environ.

Ainsi, l'action de l'insert **20** sur la préforme **2** est réalisée en deux temps : un premier temps correspondant au centrage de la préforme **2** lors de la descente de la tuyère **14**, lorsque le buvant **4** de la préforme **2** désaxée vient, après avoir rebondi contre le moule **9**, en contact avec la portion **31b** périphérique tronconique, puis un deuxième temps où, une fois la préforme **2** stabilisée et recentrée dans l'axe du moule **9**, l'insert **20** la maintient plaquée contre la face **11** supérieure de celui-ci par l'intermédiaire de la portion **31 a** centrale plane.

Les inventeurs ont pu constater que la présence de l'insert **20** fait chuter de manière considérable la proportion de préformes désaxées lors du soufflage. Il en résulte un taux de rebut moindre et l'amélioration de la qualité moyenne des récipients soufflés.

## Revendications

1. Tuyère (**14**) pour une machine (**1**) de soufflage ou d'étirage soufflage de récipients à partir d'ébauches (**2**) en matière plastique, cette tuyère (**14**) comportant:
- un corps (**15**) de tuyère propre à venir en appui contre une face (**11**) supérieure d'un moule (**9**) destiné à recevoir une ébauche (**2**);
- un insert (**20**) muni d'une face (**31**) d'appui propre à coopérer avec un buvant (**4**) de l'ébauche (**2**), cet insert (**20**) étant monté mobile dans le corps (**15**) de tuyère entre une position haute et une position basse ; et
- un organe (**30**) de rappel sollicitant l'insert (**20**) vers sa position basse, **caractérisée en ce que** la face (31) d'appui de l'insert (20) est tronconique.

2. Tuyère (**14**) selon la revendication 1, **caractérisée en ce que** la dite face d'appui tronconique (**31**) est apte à venir en contact avec un bord externe du buvant (**4**) de l'ébauche (**2**).

3. Tuyère (**14**) selon la revendication 1 ou 2, **caractérisée en ce que** la face (**31**) d'appui tronconique présente, par rapport à un plan perpendiculaire à un axe (**A**) de déplacement de l'insert (**20**), un angle (a) d'ouverture compris entre 10° environ et 60° environ.

4. Tuyère (**14**) selon l'une des revendications, **caractérisée en ce que** ladite face (**31**) d'appui présente une portion (**31a**) centrale plane, qui se prolonge par une portion (**31b**) périphérique tronconique.

5. Tuyère (**14**) selon la revendication 4, **caractérisé en ce que** la portion (**31a**) centrale plane présente un diamètre extérieur supérieur ou égal au diamètre du buvant (**4**) de l'ébauche (**2**).

6. Tuyère (**14**) selon l'une des revendications 1 à 5, **caractérisée en ce que** le corps (**15**) de tuyère définit un épaulement (**24**) formant une butée de fin de course de l'insert (**20**) en position basse.

7. Tuyère (**14**) selon l'une des revendications 1 à 6, **caractérisée en ce que** l'organe (**30**) de rappel est un ressort de compression.

8. Machine (**1**) de fabrication de récipients par soufflage ou étirage soufflage à partir d'ébauches (**2**) en matière plastique, qui comprend :
- au moins une unité (**8**) de moulage munie d'un moule (**9**) destiné à recevoir une ébauche (**2**), et
- une tuyère (**14**) selon l'une des revendications 1 à 7, montée mobile entre une position haute où elle est écartée d'une face (**11**) supérieure du moule (**9**) pour permettre l'introduction de l'ébauche (**2**) dans le moule (**9**), et une position basse dans laquelle elle est appliquée contre la face (**11**) supérieure du moule (**9**).

## Claims

1. Nozzle (14) for a machine (1) for blow moulding or for stretch-blow moulding of containers from blanks (2) made of plastic, this nozzle (14) comprising:
- a nozzle body (15) suitable for pressing against an upper face (11) of a mould (9) designed to receive a blank (2);
- an insert (20) furnished with a bearing face (31) suitable for interacting with a rim (4) of the blank (2), this insert (20) being mounted in the nozzle body (15) so as to be able to move between a high position and a low position; and
- a return member (30) forcing the insert (20) towards its low position, **characterized in that** the bearing face (31) of the insert (20) is frustoconical.

2. Nozzle (14) according to Claim 1, **characterized in that** the said frustoconical bearing face (31) is capable of coming into contact with an outer edge of the rim (4) of the blank (2).

3. Nozzle (14) according to Claim 1 or 2, **characterized in that** the frustoconical bearing face (31) has, relative to a plane perpendicular to an axis (A) of movement of the insert (20), an angle (α) of aperture of between approximately 10° and approximately 60°.

4. Nozzle (14) according to one of the claims, **characterized in that** the said bearing face (31) has a flat central portion (31a) which is extended by a frustoconical peripheral portion (31b).

5. Nozzle (14) according to Claim 4, **characterized in that** the flat central portion (31a) has an external diameter greater than or equal to the diameter of the rim (4) of the blank (2).

6. Nozzle (14) according to one of Claims 1 to 5, **characterized in that** the nozzle body (15) defines a shoulder (24) forming an end-of-travel abutment of the insert (20) in the low position.

7. Nozzle (14) according to one of Claims 1 to 6, **characterized in that** the return member (30) is a compression spring.

8. Machine (1) for manufacturing containers by blow moulding or by stretch-blow moulding from blanks (2) made of plastic, which comprises:
- at least one moulding unit (8) furnished with a mould (9) designed to receive a blank (2), and
- a nozzle (14) according to one of Claims 1 to 7, mounted so as to be able to move between a high position in which it is separated from an upper face (11) of the mould (9) in order to allow the insertion of the blank (2) into the mould (9), and a low position in which it is pressed against the upper face (11) of the mould (9).

## Patentansprüche

1. Düse (14) für eine Maschine (1) zum Blasen oder Strecken-Blasen von Behältern ausgehend von Rohlingen (2) aus Kunststoff, wobei diese Düse (14) Folgendes aufweist:
- einen Düsenkörper (15), der gegen eine obere Fläche (11) einer Form (9), die dazu bestimmt ist, einen Rohling (2) aufzunehmen, in Auflage kommen kann,
- einen Einsatz (20), der mit einer Auflagefläche (31) versehen ist, die geeignet ist, mit einer Öffnungskontur (4) des Rohlings (2) zusammenzuwirken, wobei dieser Einsatz (20) in dem Düsenkörper (15) zwischen einer Hochstellung und einer Tiefstellung beweglich installiert ist, und
- ein Rückhalteorgan (30), das den Einsatz (20) zu seiner Tiefstellung zurückholt, **dadurch gekennzeichnet, dass** die Auflagefläche (31) des Einsatzes (20) kegelstumpfförmig ist.

2. Düse (14) nach Anspruch 1, **dadurch gekennzeichnet, dass** die kegelstumpfförmige Auflagefläche (31) geeignet ist, mit einem äußeren Rand der Öffnungskontur (4) des Rohlings (2) in Berührung zu kommen.

3. Düse (14) nach Anspruch 1 oder 2, **dadurch gekennzeichnet, dass** die kegelstumpfförmige Auflagefläche (31) in Bezug zu einer Ebene senkrecht zu einer Verlagerungsachse (A) des Einsatzes (20) einen Öffnungswinkel (α) zwischen etwa 10° und etwa 60° aufweist.

4. Düse (14) nach einem der Ansprüche, **dadurch gekennzeichnet, dass** die Auflagefläche (31) einen ebenen zentralen Abschnitt (31a) aufweist, der sich durch einen kegelstumpfförmigen peripheren Abschnitt (31b) verlängert.

5. Düse (14) nach Anspruch 4, **dadurch gekennzeichnet, dass** der ebene zentrale Abschnitt (31a) einen Außendurchmesser aufweist, der größer oder gleich dem Durchmesser der Öffnungskontur (4) des Rohlings (2) ist.

6. Düse (14) nach einem der Ansprüche 1 bis 5, **dadurch gekennzeichnet, dass** der Düsenkörper (15) einen Ansatz (24) definiert, der einen Hubendanschlag des Einsatzes (20) in Tiefstellung bildet.

7. Düse (14) nach einem der Ansprüche 1 bis 6, **dadurch gekennzeichnet, dass** das Rückholorgan (30) eine Druckfeder ist.

8. Maschine (1) zum Herstellen von Behältern durch Blasen oder Strecken-Blasen ausgehend von Rohlingen (2) aus Kunststoff, die Folgendes aufweist:
- wenigstens eine Formeinheit (8), die mit einer Form (9) versehen ist, die dazu bestimmt ist, einen Rohling (2) aufzunehmen, und
- eine Düse (14) nach einem der Ansprüche 1 bis 7, die zwischen einer Hochstellung, in der sie von einer oberen Fläche (11) der Form (9) beabstandet ist, um das Einführen des Rohlings (2) in die Form (9) zu erlauben, und einer Tiefstellung, in der sie gegen die obere Fläche (11) der Form (9) angelegt ist, beweglich installiert ist.
